# FASCICULE DE BREVET EUROPEEN

(11) **EP 2 966 140 B1**
(45) Date de publication et mention de la délivrance du brevet: **10.05.2017**
(21) Numéro de dépôt: 15174317.6
(22) Date de dépôt: 29.06.2015
(51) Int. Cl.: C09J 153/02, B32B 7/12, B32B 27/08, B29C 49/04, B65D 77/20, B65D 65/40, C09J 123/20, C09J 145/00, B29C 49/22, B29K 23/00, B29K 25/00, B29L 7/00, B29L 9/00, B32B 27/30, B32B 27/32, B32B 27/34, B32B 27/36, C09J 7/02

(54) **AUTO-ADHÉSIFS THERMOFUSIBLES EXTRUDABLES POUR EMBALLAGE REFERMABLE À PROPRIÉTÉS ORGANOLEPTIQUES AMÉLIORÉES**
EXTRUDIERBARE HAFTSCHMELZKLEBSTOFFE FÜR WIEDERVERSCHLIESSBARE VERPACKUNGEN MIT VERBESSERTEN ORGANOLEPTISCHEN EIGENSCHAFTEN
EXTRUDABLE HOT-MELT PRESSURE-SENSITIVE ADHESIVES FOR RESEALABLE PACKAGING HAVING IMPROVED ORGANOLEPTIC PROPERTIES

(30) Priorité: 08.07.2014 FR 1456561
(43) Date de publication de la demande: 13.01.2016
(73) Titulaire: BOSTIK SA, 93210 La Plaine Saint Denis (FR)
(72) Inventeur: ROBERT, Christophe, 60150 Thourotte (FR)
(74) Mandataire: Granet, Pierre

(56) Documents cités:
- EP-A1- 2 687 362
- WO-A1-2010/012906
- FR-A1- 2 965 213

## Description

La présente invention a pour objet une nouvelle composition auto-adhésive thermofusible extrudable, ainsi qu'un film multicouche destiné à la fabrication d'emballages (ou barquettes) refermables, qui comprend une couche adhésive constituée par ladite composition et qui présente des propriétés organoleptiques améliorées.

On connaît, notamment par les demandes WO 02/064694, WO 12/045950, et WO 12/045951 des compositions auto-adhésives thermofusibles extrudables destinées à une utilisation pour la fabrication d'emballages (ou barquettes) refermables.

Les barquettes refermables sont utilisées dans l'industrie agroalimentaire et la grande distribution pour conditionner des denrées alimentaires, notamment des produits frais. De tels emballages sont décrits par le brevet US 4673601et la demande de brevet EP 1053952.

Après une première ouverture de l'emballage et consommation d'une partie du produit alimentaire qu'il contient, l'utilisateur peut manuellement refermer l'emballage de façon substantiellement hermétique et assurer par conséquent, le cas échéant après mise au réfrigérateur, la conservation de la portion restante du produit. Une succession de réouvertures et de refermetures est également possible.

Ces emballages comprennent en général un contenant (ou réceptacle) et un opercule formant couvercle, qui sont fixés l'un à l'autre hermétiquement par soudage.

Le réceptacle, plus ou moins profond et relativement rigide, est constitué d'une feuille multicouche (dite également complexe ou composite) ayant une épaisseur minimale de 200 µm, en général comprise entre 200 et 1000 µm. Cette feuille est thermoformée de manière à présenter un fond plan sur lequel repose le produit alimentaire et un pourtour en forme de bande plane. Ce pourtour, généralement parallèle au fond, est lié par soudure à l'opercule, souple et plan, qui est constitué d'un film multicouche (qualifié également de complexe ou composite) d'épaisseur en général comprise entre 40 et 150 µm, et qui est désigné parfois par la dénomination de film d'operculage.

Lors de l'ouverture de l'emballage, le film d'operculage est séparé manuellement du réceptacle au niveau de la bande plane du pourtour. Cette opération laisse apparaître une couche adhésive au niveau de cette bande plane, tant sur la bande d'opercule que sur la bande de réceptacle qui étaient précédemment en contact. Ces 2 couches adhésives (continues ou discontinues) « dites filles » résultent de la rupture d'une couche adhésive initiale ou « mère » ou, éventuellement, de sa séparation (ou décollement) de l'une des 2 couches du film complexe multicouche qui lui sont adjacentes. La couche adhésive initiale est donc une des couches dudit film complexe multicouche qui est lui-même un élément compris soit dans la feuille composite qui constitue le réceptacle soit, éventuellement, dans le film d'operculage.

Les 2 couches adhésives filles qui sont présentes, après ouverture de l'emballage, sur les bandes situées sur le pourtour respectif du réceptacle et de l'opercule sont donc en regard l'une de l'autre. Ainsi, il suffit de repositionner l'opercule sur le réceptacle, conformément à leur position dans l'emballage avant ouverture, afin de remettre en contact les 2 bandes de couches adhésives filles. Une simple pression manuelle permet alors d'obtenir la refermeture de l'emballage.

La composition adhésive qui constitue les couches adhésives mère et filles est donc nécessairement un adhésif sensible à la pression (également dénommé auto-adhésif ou encore PSA, de l'anglais « Pressure Sensitive Adhesive »).

Les compositions auto-adhésives extrudables décrites dans les demandes précitées sont des compositions thermofusibles comprenant une résine tackifiante et un copolymère bloc styrénique incluant un bloc élastomère. Ce sont des substances solides à température ambiante qui ne contiennent ni eau ni solvant. Appliquées à l'état fondu, elles se solidifient lors de leur refroidissement, formant ainsi une couche adhésive qui assure la liaison entre les 2 couches minces de matériau polymérique thermoplastique à assembler, tout en offrant à l'emballage correspondant les propriétés avantageuses d'ouverture et de refermeture.

Par ailleurs, ces compositions auto-adhésives thermofusibles, qui sont préparées par mélange à chaud de leurs ingrédients, présentent en plus l'avantage de pouvoir être mises sous la forme de granulés (de taille comprise entre 1 et 10 mm) au moyen d'une étape d'extrusion réalisée directement à chaud après l'étape de mélange, par exemple au moyen d'une extrudeuse à 2 vis munie d'un outil de découpe du produit extrudé.

Grâce aux granulés ainsi obtenus, le film, par exemple tricouche, qui est constitué de la couche de composition auto-adhésive thermofusible et des 2 couches minces de matériau polymérique thermoplastique à assembler, peut être commodément fabriqué par co-extrusion, en alimentant notamment un dispositif de soufflage de gaine par les matériaux constitutifs des 3 couches sous la forme de granulés de taille définie précédemment.

Toutefois, dans le cadre de l'amélioration constante des emballages de produits alimentaires proposés par l'industrie au consommateur, il apparaît à présent de plus en plus nécessaire d'envisager l'impact desdits emballages sur une possible altération des propriétés organoleptiques des denrées alimentaires emballées, et notamment sur un risque d'altération de leur goût et/ou de leur odeur (ou parfum), tout particulièrement dans le cas d'emballages hermétiques.

S'agissant des compositions auto-adhésives thermofusibles pour emballages refermables connues de l'art antérieur, on considère que cet impact peut résulter de la présence dans lesdites compositions de très faibles quantités -allant jusqu'à une limite maximale de 5 ppm- de composés organiques volatils de faible masse molaire (inférieure à 1000 Da) qui proviennent des impuretés présentes dans les matières premières : par exemple des résidus des monomères ou oligomères qui sont mis en oeuvre dans les réactions de polymérisation des copolymères blocs styréniques ou des résines tackifiantes.

On ne peut ainsi écarter le risque que, dans l'emballage final, des composés organiques volatils présents à l'état de traces dans la composition auto-adhésive thermofusible ne migrent à travers les couches de matériaux thermoplastiques du film complexe pour pénétrer dans la denrée alimentaire, et en modifier les propriétés organoleptiques. Ce risque peut d'autant moins être écarté si l'on considère que certaines personnes très sensibles aux sensations olfactives et/ou gustatives sont capables de détecter des traces allant jusqu'à 1 ppb de certaines substances.

La demande de brevet WO 14/020243 décrit, pour cette même problématique organoleptique, une composition auto-adhésive thermofusible qui est constitutive d'une couche liant, dans un film multicouche, 2 couches minces de matériau thermoplastique, et qui comprend obligatoirement une zéolithe hydrophobe.

La présente invention a pour but de proposer une autre composition auto-adhésive thermofusible extrudable que celle décrite par cette dernière demande, qui permet, sans pour autant nécessiter la présence d'une zéolithe hydrophobe, de conférer au film multicouche dont elle constitue la couche adhésive, un moindre risque d'altération des propriétés organoleptiques de la denrée alimentaire emballée, et plus particulièrement de son goût.

Un autre but de la présente invention est de proposer une composition auto-adhésive thermofusible extrudable présentant une homogénéïté d'aspect améliorée, y compris dans la couche adhésive comprise dans le film multicouche.

Un autre but de la présente invention est de proposer une composition auto-adhésive thermofusible extrudable ainsi qu'un film multicouche qui comprend 2 couches minces de matériaux thermoplastiques liées entre elles par une couche de ladite composition, et qui offre à ces 2 couches minces des propriétés d'ouverture et de refermeture, propres à l'utilisation dudit film pour la fabrication d'un emballage refermable.

Un autre but de la présente invention est de fabriquer ledit film multicouche par un procédé industriel de co-extrusion à chaud des matériaux constitutifs de chaque couche, tel que la co-extrusion par soufflage de gaine, comprenant l'introduction desdits matériaux sous la forme de granulés.

La présente invention a donc pour objet en premier lieu une composition auto-adhésive thermofusible a ayant un indice d'écoulement (ou MFI) allant de 0,01 à 200 g/10 minutes et comprenant, sur la base du poids total de ladite composition a :
- de 45 à 70 % en poids d'une composition a1 de copolymères blocs styréniques comprenant au moins un bloc élastomère, ladite composition a1 étant constituée, sur la base de son poids total :
   - de 30 à 90 % en poids d'au moins un copolymère dibloc de type Styrène-Isoprène (SI), et de
   - de 10 à 70 % en poids d'au moins un copolymère tribloc linéaire Styrène-Isoprène-Styrène (SIS) ;
   la teneur en motifs styréniques totale de ladite composition a1 variant de 10 à 40 % en poids sur la base du poids total de a1 ; et
- de 30 à 55 % en poids d'au moins une résine tackifiante a2 ayant une température de ramollissement comprise entre 5 et 150 °C et obtenue par un procédé comprenant :
   - une première étape de polymérisation d'une composition choisie parmi :
      - une composition (i) constituée essentiellement d'hydrocarbures insaturés ayant 9 atomes de carbone, ou
      - une composition (ii) constituée essentiellement de dicyclopentadiène et de ses dérivés ayant 10 atomes de carbone ; puis
   - une seconde étape d'hydrogénation du polymère ainsi obtenu.

Il a été trouvé en effet que le choix de la résine tackifiante spécifique a2 combiné avec le choix d'un copolymère bloc styrénique de type SIS/SI permet, de façon surprenante, d'obtenir un film multicouche qui convient à la fabrication d'emballages refermables pour denrées alimentaires, et qui permet en outre d'abaisser le risque d'altération des propriétés organoleptiques des denrées alimentaires emballées. De plus la composition auto-adhésive thermofusible selon l'invention est extrudable, ce qui permet de la présenter sous la forme de granulés de taille comprise entre 1 et 10 mm, ce qui est particulièrement avantageux pour la fabrication du film multicouche correspondant.

Les pourcentages ci-dessus ainsi que ceux utilisés de façon générale dans le présent texte pour exprimer des quantités correspondent, en l'absence d'indication contraire, à des pourcentages poids/poids. Il est également précisé que les pourcentages indiqués ci-dessus pour les teneurs, dans la composition a, de la composition a1 de copolymères blocs et de la résine tackifiante a2 sont des pourcentages relatifs au poids total de ladite composition a. Il en est de même pour les pourcentages indiqués pour les composants optionnels compris dans la composition a qui sont précisés ultérieurement dans le présent texte.

Les copolymères SI et SIS compris dans la composition a selon l'invention ont une masse molaire moyenne en poids M_{w} comprise entre 60 kDa et 400 kDa. En l'absence d'indication contraire, les masses molaires moyennes en poids M_{w} qui sont données dans le présent texte sont exprimées en dalton (Da) et sont déterminées par Chromatographie par Perméation de Gel, la colonne étant calibrée avec des étalons de polystyrène.

Selon une variante préférée de la composition auto-adhésive thermofusible a selon l'invention, la teneur en diblocs SI dans la composition a1 de copolymères blocs styréniques peut varier de 50 à 80 %, encore plus préférentiellement de 55 à 80 %.

Selon encore une autre variante préférée, la teneur en motifs styréniques totale de la composition a1 de copolymères blocs styréniques peut varier de 13 à 18 %.

Les copolymères de type SIS et SI qui sont susceptibles d'être mis en oeuvre pour la préparation de la composition auto-adhésive thermofusible a sont disponibles commercialement. Lesdits copolymères sont eux-mêmes disponibles sous la forme de compositions tribloc/dibloc. Le Kraton^{®} D1113BT de la société Kraton et le Quintac^{®} 3520 de la société Zeon Chemicals sont des exemples de telles compositions.

Le Kraton^{®} D1113BT est une composition dont la teneur en motifs styréniques totale est de 16 %, et qui est constituée de 45 % de copolymère tribloc SIS linéaire de M_{w} environ 250 kDa, et de 55 % de copolymère dibloc SI de M_{w} environ 100 kDa. Le Quintac^{®} 3520 est une composition qui est constituée, respectivement, de 22 % et de 78 % de tribloc SIS linéaire (M_{w} environ 300 kDa) et de dibloc SI (M_{w} environ 130 kDa), et dont la teneur totale en motifs styréniques est de 15 %.

La composition auto-adhésive thermofusible a selon l'invention comprend au moins une (ou plusieurs) résine tackifiante a2. Cette résine a2 a une masse molaire moyenne en poids M_{w} généralement comprise entre 300 et 5000 Da. La température (ou point) de ramollissement des résines tackifiantes utilisables dans la composition a peut varier de 5 à 150 °C.

La température de ramollissement (couramment désignée dans le métier par le signe anglais R&B pour « Ring and Ball ») est déterminée conformément au test normalisé ASTM E 28 dont le principe est le suivant. Un anneau en laiton de diamètre environ 2 cm est rempli de la résine à tester à l'état fondu. Après refroidissement à température ambiante, l'anneau et la résine solide sont placés horizontalement dans un bain de glycérine thermostaté dont la température peut varier de 5° C par minute. Une bille d'acier de diamètre environ 9,5 mm est centrée sur le disque de résine solide. La température de ramollissement est -durant la phase de montée en température du bain à raison de 5°C par minute- la température à laquelle le disque de résine flue d'une hauteur de 25,4 mm sous le poids de la bille.

Une température de ramollissement comprise entre 80 et 150°C est plus particulièrement préférée.

Le procédé d'obtention de la résine a2 est mis en oeuvre, dans une 1^{ère} étape, par polymérisation des composés constitutifs des compositions (i) ou (ii), lesquelles sont par exemple obtenues à partir de la distillation du naphta. Les hydrocarbures insaturés de la composition (i) peuvent être aliphatique ou non.

L'hydrogénation du polymère obtenu est réalisée selon des modalités connues, conduisant à une hydrogénation partielle ou totale des liaisons insaturées, de préférence totale.

De nombreuses résines répondant à la définition de la résine a2 sont disponibles commercialement. On peut citer comme exemples de telles résines :
- la Regalite™ R1125, disponible auprès de la société Eastman, qui est une résine totalement hydrogénée ayant une température de ramollissement de 125°C, une masse molaire moyenne en poids M_{w} de 1200 Da, et qui est obtenue par polymérisation d'une composition (i) d'hydrocarbures insaturés ayant 9 atomes de carbone ;
- l'Escorez™ 5340, disponible auprès de la société ExxonMobil, qui est une résine totalement hydrogénée ayant une température de ramollissement de 140°C, une masse molaire moyenne en poids M_{w} de 680 Da, et qui est obtenue par polymérisation d'une composition (ii) ;
- l'Escorez™ 5400, disponible auprès de la société ExxonMobil, qui est une résine partiellement hydrogénée ayant une température de ramollissement de 100°C, une masse molaire moyenne en poids M_{w} de 570 Da, et qui est obtenue par polymérisation d'une composition (ii).

On peut citer également comme autres exemples de résines a2 disponibles commercialement les Regalite™ R1090 et R1100 de Eastman (R&B respectifs de 90°C et 100°C), les Arkon™ P90, P100, P125 disponibles auprès de la société Arakawa (R&B respectifs de 90°C, 100°C et 125°C), les Escorez™ 5300 et 5380 de la société ExxonMobil (R&B respectifs de 105°C et 85°C, et M_{w} respectives de 590 et 460 Da), les Sukorez™ SU90, SU100, SU 120 de la société Kolon (R&B respectifs de 90°C, 100°C, 120°C).

Selon une variante préférée, la composition auto-adhésive thermofusible a selon l'invention comprend de 50 à 70 % de la composition a1 et de 30 à 50 % de la (ou des) résine tackifiante a2.

Selon une autre variante préférée, la composition a est constituée essentiellement de la composition a1 et de la résine tackifiante a2 dans des quantités comprises dans les domaines précisés précédemment.

Par les termes « constituée essentiellement », on entend signifier que, outre la composition a1 et la (ou les) résine tackifiante a2, la composition a renferme également un ou plusieurs composants optionnels, mais dans une quantité ne dépassant pas 5 %, et de préférence 2 %.

De tels composants optionnels, dont la teneur dans la composition a peut aller de 0,1 à 2 % sont par exemple des stabilisants (ou anti-oxydants). Ces composés sont introduits pour protéger la composition d'une dégradation résultant d'une réaction avec de l'oxygène qui est susceptible de se former par action de la chaleur, de la lumière ou de catalyseurs résiduels sur certaines matières premières telles que les résines tackifiantes. Ces composés peuvent inclure des anti-oxydants primaires qui piègent les radicaux libres et sont généralement des phénols substitués comme l'Irganox^{®} 1010 de CIBA. Les anti-oxydants primaires peuvent être utilisés seuls ou en combinaison avec d'autres anti-oxydants tels que des phosphites comme l'Irgafos^{®} 168 également de CIBA, ou encore avec des stabilisants UV tels que des amines.

On peut citer également comme exemple de tels composants optionnels, un plastifiant, dont la teneur dans la composition a ne dépasse pas 5 %. On peut utiliser comme plastifiant une huile paraffinique et naphténique (comme le Primol^{®} 352 de la société ESSO) comprenant éventuellement des composés aromatiques (comme le Nyflex 222B).

Enfin d'autres exemples de tels composants optionnels sont des charges minérales ou organiques, des pigments ou des colorants.

L'indice d'écoulement (ou Melt Flow Index MFI) de la composition auto-adhésive thermofusible a est mesuré à 190°C et pour un poids total de 2,16 kg, conformément à la condition d) de la norme ISO 1133. Le MFI est la masse de composition (préalablement placée dans un cylindre vertical) qui s'écoule en 10 minutes au travers d'une filière de diamètre fixé, sous l'effet d'une pression exercée par un piston chargé ayant le poids total de 2,16 kg. En l'absence de mention contraire les valeurs de MFI indiquées dans le présent texte ont été mesurées dans ces mêmes conditions.

Les compositions auto-adhésives thermofusibles ayant un MFI allant de 2 à 70 g/10 minutes sont plus particulièrement préférées.

Selon une variante tout particulièrement préférée en vue de la fabrication du film multicouche, la composition a selon l'invention se présente sous la forme de granulés de taille comprise entre 1 et 10 mm, de préférence entre 2 et 5 mm.

La composition a peut être préparée sous cette forme par un procédé qui comprend :
- une simple étape de mélange des ingrédients à chaud, entre 150 et 200°C, de préférence à environ 160°C, au moyen d'une extrudeuse à 2 vis munie d'un outil de découpe du produit extrudé en sortie de la filière, puis
- une étape de refroidissement, par exemple à température ambiante.

La présente invention a pour objet en second lieu un film multicouche comprenant 2 couches minces B et C de matériau thermoplastique liées entre elles par une couche adhésive A, caractérisé en ce que ladite couche A a une épaisseur comprise entre 7 et 50 µm et est constituée par la composition auto-adhésive thermofusible a, telle que définie précédemment.

La couche adhésive A assure de préférence la liaison entre une couche mince complexable B et une couche mince scellable et sécable C.

L'épaisseur de la couche adhésive A est de préférence comprise entre 7 et 35 µm, et encore plus préférentiellement comprise entre 7 et 25 µm.

Selon une autre variante préférée, l'épaisseur de la couche A peut également être comprise entre 10 et 35 µm, ou mieux encore entre 10 et 25 µm.

La couche complexable B peut être complexée (ou contre-collée) avec d'autres couches pour la réalisation de l'emballage, par exemple avec une couche rigide pour la réalisation du réceptacle.

La couche scellable et sécable C permet d'assurer, au niveau du pourtour le long duquel le réceptacle est lié par soudure à l'opercule, la première ouverture de l'emballage, au moyen d'une zone fragilisée sécable. Après ouverture, la zone fragilisée laisse apparaître :
- la couche adhésive mère sur la bande d'opercule et/ou sur la bande de réceptacle qui étaient en contact dans l'emballage fermé, et/ou
- 2 couches adhésives filles résultant de la rupture de la couche adhésive mère et localisées sur la bande d'opercule et/ou la bande de réceptacle.

Le matériau utilisable pour constituer les 2 couches B et C est généralement un polymère thermoplastique (identique ou différent pour les 2 couches) tel que :
- le polyéthylène (PE),
- le polypropylène (PP),
- un copolymère à base d'éthylène et de propylène,
- le polyamide (PA),
- le polyéthylènetéréphtalate (PET), ou encore
- un copolymère à base d'éthylène comme par exemple un copolymère greffé anhydride maléïque, un copolymère d'éthylène et d'acétate de vinyle (EVA), un copolymère d'éthylène et d'alcool vinylique (EVOH), un copolymère d'éthylène et d'un acrylate d'alkyle tel que l'acrylate de méthyle (EMA) ou de butyle (EBA),
- le polystyrène (PS),
- le polychlorure de vinyle (PVC),
- le polyfluorure de vinylidène (PVDF),
- un polymère d'acide lactique (PLA), ou
- un polyhydroxyalkanoate (PHA).

On préfère utiliser pour constituer les 2 couches B et C un matériau polyoléfinique, et tout particulièrement le PE, et encore plus préférentiellement un PE à basse densité (également désigné par l'appellation anglaise de Low Density PolyEthylene ou LDPE).

L'épaisseur des couches B et C est susceptible de varier dans un large domaine allant de 5 à 150 µm.

Selon une variante préférée, le film multicouche selon l'invention comprend, outre les couches A, B et C, 2 couches de liaison D et E telles que la couche adhésive A est :
- reliée à la couche B par l'intermédiaire de la couche D, et
- reliée à la couche C par l'intermédiaire de la couche E.

Les couches de liaison D et E sont également désignées par l'appellation de « couches intermédaires » ou par le terme anglais de « tie layers » et ont généralement une épaisseur comprise entre 1 et 10 µm, de préférence entre 2 et 8 µm. L'utilisation de telles couches de liaison permet avantageusement d'améliorer la qualité de la refermeture du film multicouche, et donc de l'emballage refermable correspondant, assurant ainsi au consommateur de manière plus efficace la conservation de la portion restante du produit alimentaire périssable contenu dans l'emballage, après la première ouverture de ce dernier.

Les couches de liaison D et E sont respectivement constituées de compositions d et e, identiques ou différentes, ayant une température de fusion d'environ 80 à 120°C et comprenant essentiellement des polymères choisis parmi :
- des homopolymères ou copolymères d'éthylène,
- des homopolymères ou copolymères de propylène,
- des copolymères d'éthylène avec un comonomère polaire, et
- des homopolymères ou copolymères d'oléfines greffés.

Il est fait référence pour de plus amples précisions sur ces compositions d et e à la demande de brevet US2013/0029553.

De préférence, les compositions d et e comprennent chacune un polyéthylène ou polypropylène modifiés par un anhydride cyclique d'un acide dicarboxylique insaturé ayant de 4 à 8 atomes de carbone.

L'anhydride maléïque est un anhydride cyclique tout particulièrement préféré.

On entend désigner par « polyéthylène modifié » par ledit anhydride soit un copolymère d'éthylène et dudit anhydride, soit un homopolymère ou copolymère d'éthylène greffé par ledit anhydride.

Selon une autre variante de réalisation, le film multicouche selon l'invention comprend, outre les 3 couches essentielles A, B et C, et les 2 couches optionnelles D et E, d'autres couches minces nécessaires à la réalisation de l'emballage, comme par exemple :
- une couche rigide nécessaire à la tenue mécanique du réceptacle, ou
- une couche imprimable, ou encore
- une couche à effet barrière contre l'oxygène, la vapeur d'eau ou bien le monoxyde de carbone.

Les matériaux utilisables pour constituer lesdites couches peuvent être identiques ou différents et comprennent en général des polymères thermoplastiques qui peuvent être choisis parmi les polymères cités précédemment pour les couches B et C.

Selon une variante de réalisation, le film multicouche selon l'invention est un film à 3 couches constitué par la couche adhésive A et les 2 couches B et C, selon l'enchaînement B/A/C/ dans lequel le signe «/» signifie que les faces des couches concernées sont en contact direct.

Selon une autre variante de réalisation, le film multicouche selon l'invention est un film à 5 couches constitué par la couche adhésive A, les 2 couches intermédiaires D et E et les 2 couches externes B et C, selon l'enchaînement B/D/A/E/C dans lequel le signe «/» signifie que les faces des couches concernées sont en contact direct.

La présente invention concerne encore un procédé de fabrication du film multicouche tel que défini précédemment, caractérisé en ce qu'il comprend une étape de co-extrusion de la composition auto-adhésive thermofusible a et des matériaux constitutifs des couches B et C et, le cas échéant, des couches D et E.

De préférence, les compositions et matériaux constitutifs des couches A, B, C et, le cas échéant, D et E sont alimentés dans le dispositif de co-extrusion sous la forme de granulés de taille comprise entre 1 et 10 mm, de préférence entre 2 et 5 mm. Ainsi, la composition auto-adhésive a mise en oeuvre dans le film multicouche selon l'invention permet, de façon particulièrement avantageuse, d'assurer à la fois les propriétés requises pour ledit film et la possibilité d'une présentation de ladite composition a sous la forme des granulés précités. Les autres couches éventuellement comprises dans le film multicouche peuvent être obtenues soit par l'incorporation dans le dispositif de co-extrusion des matériaux constitutifs correspondants sous la forme de granulés de même taille (comme par exemple pour les couches de liaison D et E), soit par un procédé de complexage du film directement issu de la co-extrusion, mettant en oeuvre par exemple un adhésif à base de polyuréthane.

Le dispositif de co-extrusion mis en oeuvre dans le procédé de fabrication est de préférence un dispositif de co-extrusion par soufflage de bulle (également connu sous la dénomination de « co-extrusion par soufflage de gaine »). De façon connue de l'homme du métier, ce procédé comprend :
- la fusion, dans des extrudeuses séparées, des compositions et matériaux constitutifs des couches A, B et C, ainsi que, le cas échéant, D et E, puis
- le passage des flux correspondants à travers un ensemble de filières annulaires et concentriques, de manière à former une bulle tubulaire à plusieurs couches, dans l'ordre correspondant à celui désiré pour la structure finale, puis
- l'expansion radiale (relativement à la filière annulaire) et l'étirement (dans le sens axial) de la bulle, puis
- le refroidissement de la bulle.

Les caractéristiques géométriques des filières, de même que les paramètres du procédé tels que le taux d'expansion radiale et la vitesse d'étirement sont fixés de manière à obtenir l'épaisseur désirée pour les différentes couches constitutives du film multicouche. Il est notamment fait référence pour plus ample description du procédé de co-extrusion par soufflage de bulle à la demande de brevet US2013/0029553.

La présente invention concerne encore l'utilisation du film multicouche tel que décrit précédemment pour la fabrication d'emballages refermables.

L'utilisation pour la fabrication de barquettes refermables est particulièrement avantageuse, et selon un mode de réalisation particulièrement préféré pour la fabrication du film d'operculage de ces barquettes.

Les exemples suivants sont donnés à titre purement illustratif de l'invention, et ne sauraient en aucun cas être interprétés pour en limiter la portée.

### Exemple A (référence) :

### 1. Préparation d'une composition auto-adhésive thermofusible a :

La composition adhésive indiquée dans le Tableau suivant est préparée sous la forme de granulés de taille environ 4 mm, par mélange de ses ingrédients à 160°C au moyen d'une extrudeuse à 2 vis, extrusion à travers une filière, puis découpe du produit extrudé et refroidissement à température ambiante.

Le MFI mesuré est de 57 g/10 minutes.

### 2. Préparation d'un film tricouche B/A/C comprenant une couche A de la composition de l'exemple A :

Ce film tricouche est fabriqué au moyen d'un dispositif pilote de co-extrusion par soufflage de bulle fonctionnant en continu, dans lequel 3 extrudeuses sont alimentées :
- pour l'une, par la composition a de l'exemple A, et
- pour les 2 autres, par du LDPE ;
les 3 compositions étant sous la forme de granulés de taille d'environ 4 mm.

Les paramètres du procédé sont ajustés de manière à fabriquer un film tricouche constitué :
- en tant que couche A, d'une couche d'épaisseur 15 µm constituée de la composition de l'exemple A,
- en tant que couche mince complexable B, d'une couche d'épaisseur 30 µm constituée de LDPE ;
- en tant que couche mince scellable et sécable C, d'une couche d'épaisseur 15 µm constituée également de LDPE.

Parmi les paramètres usuellement fixés, on peut citer un taux d'expansion radiale de la bulle égal à 3, une vitesse d'étirement de 7 m/minute et un débit global de 11 kg/heure.

Le film tricouche ainsi obtenu a une épaisseur totale de 60 µm, une longueur de 50 m et est conditionné sous la forme d'une bobine de 250 mm de laize.

### Mesure de la force de première ouverture par pelage en T à 23°C :

On découpe dans le film tricouche ainsi obtenu un échantillon sous la forme d'une feuille rectangulaire au format A4 (21 x 29,7 cm).

La face externe de la couche complexable B de cet échantillon est :
- dans un premier temps soumise à un traitement de surface Corona (au moyen d'un plasma), puis
- dans un second temps complexée (autrement dit contrecollée ou laminée) sur un film PET d'épaisseur 23 µm au moyen d'un adhésif solvanté à base de polyuréthane et à l'aide d'un appareil d'enduction du type barre de Mayer.

La feuille rectangulaire est alors placée sous presse pendant 24h.

Puis, ladite feuille rectangulaire est repliée selon une ligne située en son milieu et parallèle au petit côté du rectangle, conduisant à la mise en contact avec elle-même de la couche E scellable et sécable.

On procède alors à un scellage partiel, au moyen de deux mâchoires chauffantes à 130°C, appliquées sous une pression de 6 bar pendant 1 seconde, de manière à obtenir des zones scellées de forme rectangulaire (8 cm de longueur et 1 cm de largeur) disposées perpendiculairement à la ligne de pliure. Chaque zone scellée est découpée pour obtenir une éprouvette de traction dans laquelle la zone scellée de 8 cm de longueur est prolongée (à celle de ses extrémités qui est opposée à la ligne de pliure) par 2 bandes d'environ 2 cm de longueur laissées libres et non scellées.

Ces deux bandes libres sont fixées sur deux dispositifs d'attache (appelés mors) reliés, respectivement, à une partie fixe et une partie mobile d'un appareil de traction qui sont situées sur un axe vertical. Cet appareil de traction est un dynamomètre.

Alors qu'un mécanisme d'entraînement communique à la partie mobile une vitesse uniforme de 300 mm/minute conduisant au pelage des 2 couches scellées, les extrémités se déplacent progressivement selon un axe vertical en formant un angle de 180°. Un capteur de force relié à ladite partie mobile mesure la force supportée par l'éprouvette ainsi maintenue. La mesure est réalisée dans une salle climatique maintenue à une température de 23°C.

La force obtenue est indiquée dans le Tableau.

### Mesure de la force de deuxième ouverture par pelage en T à 23°C :

Les 2 parties de l'éprouvette précédente sont, après pelage, repositionnées en regard l'une de l'autre et mises en contact manuellement. Elles sont alors soumises à une pression exercée au moyen d'un rouleau de masse 2 kg avec lequel on procède à un mouvement d'aller-retour selon une direction parallèle à la longueur de l'éprouvette.

On obtient ainsi une éprouvette de traction de forme identique à celle préparée pour le test de pelage précédent qui est alors répété.

La force obtenue est indiquée dans le Tableau.

### Test d'évaluation de l'altération du goût de beurre mis au contact de la composition adhésive:

Ce test est réalisé sur une plaquette de beurre de 125 g de dimensions 110 x 65 x 17 mm.

Cette plaquette est centrée horizontalement sur un rectangle de dimensions 110x65 mm découpé dans la feuille de film tricouche au format A4 mentionnée précédemment, la plaquette étant au contact de la couche scellable et sécable C dudit film.

La face supérieure de la plaquette de beurre est ensuite recouverte d'un second rectangle de film tricouche identique au premier, et est également au contact de la couche scellable et sécable C.

La structure ainsi obtenue est suremballée dans du papier aluminium, puis placée durant 10 jours dans un réfrigérateur maintenu à 10°C.

A titre de contrôle, on procède également durant le même temps au stockage dans le même réfrigérateur d'une plaquette de beurre identique à la précédente, qui est simplement emballée dans du papier aluminium.

Au bout de 10 jours, les 2 plaquettes de beurre sont récupérées, découpées chacune en 20 morceaux de 6 g environ et transmises à un panel de 10 personnes pour évaluation du goût. Chaque membre du panel attribue, après dégustation, une note de 0 à 4 aux morceaux issus de la plaquette mise en contact avec le film tricouche comprenant la couche adhésive A, par rapport aux morceaux issus de la plaquette de contrôle, selon le barème suivant :
0 = pas de différence perceptible
1 = différence à peine perceptible
2 = faible différence
3 = différence marquée
4 = forte différence.

La note moyenne obtenue est indiquée dans le Tableau.

### Exemples 1 et 2 (selon l'invention) :

On répète l'exemple A avec les compositions a indiquées dans le Tableau.

Le MFI obtenu pour chaque composition a, les forces mesurées pour la 1^{ère} et la 2^{ème} ouverture sont indiquées dans le Tableau, ainsi que les résultats du test d'évaluation de l'altération du goût du beurre.

On observe que la force de 1^{ère} ouverture reste sensiblement stable par rapport à celle mesurée pour l'exemple A de référence. En revanche la force de 2^{ème} ouverture est abaissée, mais est estimée correspondre à une qualité de refermeture (faisant suite à la première ouverture de l'emballage), encore acceptable.

Par ailleurs, l'altération du goût du beurre résultant de la composition a est réduite de façon très significative par rapport à l'exemple A.

**Tableau**

| | Ingrédient | Teneur en % poids/poids | | |
|---|---|---|---|---|
| | | Exemple A (réf.) | Exemple 1 | Exemple 2 |
| Composition a | Kraton^{®} D1113BT | 59,7 | 39,8 | 39,8 |
| | Quintac^{®} 3520 | - | 19,9 | 19,9 |
| | Escorez^{®} 1310LC | 24,9 | - | - |
| | Regalite^{®} R1125 | - | 39,8 | - |
| | Escorez^{®} 5340 | - | - | 39,8 |
| | Dercolyte^{®} S 115 | 14,9 | - | - |
| | Irganox^{®} 1010 | 0,5 | 0,5 | 0,5 |
| | | | | |
| Composition a1 | Teneur en motifs styréniques (en % poids/poids) | 16 | 16 | 16 |
| | Teneur en diblocs (en % poids/poids) | 56 | 63 | 63 |
| Composition a | MFI (en g/10 mn) | 57 | 56 | 56 |
| | | | | |
| Film tricouche | Force de 1^{ère} ouverture (en N/cm) | 3 | 2,8 | 3,1 |
| | Force de 2^{ème} ouverture (en N/cm) | 0,84 | 0,5 | 0,6 |
| | Altération du goût du beurre | 0,4 | 0,2 | 0,1 |

## Revendications

1. Composition auto-adhésive thermofusible a ayant un indice d'écoulement allant de 0,01 à 200 g/10 minutes et comprenant, sur la base du poids total de ladite composition a :
- de 45 à 70 % en poids d'une composition a1 de copolymères blocs styréniques comprenant au moins un bloc élastomère, ladite composition a1 étant constituée, sur la base de son poids total :
- de 30 à 90 % en poids d'au moins un copolymère dibloc de type Styrène-Isoprène (SI), et de
- de 10 à 70 % en poids d'au moins un copolymère tribloc linéaire Styrène-Isoprène-Styrène (SIS) ;
la teneur en motifs styréniques totale de ladite composition a1 variant de 10 à 40 % en poids sur la base du poids total de a1 ; et
- de 30 à 55 % en poids d'au moins une résine tackifiante a2 ayant une température de ramollissement comprise entre 5 et 150 °C et obtenue par un procédé comprenant :
- une première étape de polymérisation d'une composition choisie parmi :
- une composition (i) constituée essentiellement d'hydrocarbures insaturés ayant 9 atomes de carbone, ou
- une composition (ii) constituée essentiellement de dicyclopentadiène et de ses dérivés ayant 10 atomes de carbone ; puis
- une seconde étape d'hydrogénation du polymère ainsi obtenu.

2. Composition auto-adhésive thermofusible selon la revendication 1, **caractérisée en ce que** la teneur en diblocs SI dans la composition a1 varie de 50 à 80 %.

3. Composition auto-adhésive thermofusible selon l'une des revendications 1 ou 2, **caractérisée en ce que** la température de ramollissement de la résine tackifiante a2 est comprise entre 80 et 150°C.

4. Composition auto-adhésive thermofusible selon l'une des revendications 1 à 3, **caractérisée en ce qu'**elle est constituée essentiellement de la composition a1 et d'une résine tackifiante a2.

5. Composition auto-adhésive thermofusible selon l'une des revendications 1 à 4, **caractérisée en ce que** son indice d'écoulement va de 2 à 70 g/10 minutes.

6. Composition auto-adhésive thermofusible selon l'une des revendications 1 à 5, **caractérisée en ce qu'**elle se présente sous la forme de granulés de taille comprise entre 1 et 10 mm.

7. Film multicouche comprenant 2 couches minces B et C de matériau thermoplastique liées entre elles par une couche adhésive A, **caractérisé en ce que** ladite couche A a une épaisseur comprise entre 7 et 50 µm et est constituée par la composition auto-adhésive thermofusible a telle que définie dans l'une des revendications 1 à 6.

8. Film multicouche selon la revendication 7, **caractérisé en ce que** l'épaisseur de la couche adhésive A est comprise entre 7 et 35 µm.

9. Film multicouche selon l'une des revendications 7 ou 8, **caractérisé en ce qu'**il comprend, outre les couches A, B et C, 2 couches de liaison D et E telles que la couche adhésive A est :
- reliée à la couche B par l'intermédiaire de la couche D, et
- reliée à la couche C par l'intermédiaire de la couche E.

10. Film multicouche selon l'une des revendications 7 à 9, **caractérisé en ce que** les couches de liaison D et E sont constituées de compositions d et e, identiques ou différentes, ayant une température de fusion d'environ 80 à 120°C et comprenant essentiellement des polymères choisis parmi :
- des homopolymères ou copolymères d'éthylène,
- des homopolymères ou copolymères de propylène,
- des copolymères d'éthylène avec un comonomère polaire, et
- des homopolymères ou copolymères d'oléfines greffés.

11. Film tricouche selon l'une des revendications 7 ou 8, **caractérisé en ce qu'**il est constitué par la couche adhésive A et les 2 couches B et C, selon l'enchaînement B/A/C/ dans lequel le signe «/» signifie que les faces des couches concernées sont en contact direct.

12. Film à 5 couches selon l'une des revendications 9 ou 10, **caractérisé en ce qu'**il est constitué par la couche adhésive A, les 2 couches intermédiaires D et E et les 2 couches externes B et C, selon l'enchaînement B/D/A/E/C dans lequel le signe «/» signifie que les faces des couches concernées sont en contact direct.

13. Procédé de fabrication du film multicouche tel que défini dans l'une des revendications 7 à 12, **caractérisé en ce qu'**il comprend une étape de co-extrusion de la composition auto-adhésive thermofusible a et des matériaux constitutifs des couches B et C et, le cas échéant, des couches D et E.

14. Procédé de fabrication selon la revendication 13, **caractérisé en ce que** les compositions et matériaux constitutifs des couches A, B, C et, le cas échéant, D et E sont alimentés dans le dispositif de co-extrusion sous la forme de granulés de taille comprise entre 1 et 10 mm.

15. Procédé de fabrication du film multicouche selon l'une des revendications 13 ou 14, **caractérisé en ce que** le dispositif de co-extrusion mis en oeuvre est un dispositif de co-extrusion par soufflage de bulle.

16. Utilisation du film multicouche tel que défini dans l'une des revendications 7 à 12 pour la fabrication d'emballages refermables.

## Patentansprüche

1. Selbstklebende Schmelzklebstoffzusammensetzung a mit einem Fließindex von 0,01 bis 200 g/10 Minuten und die, bezogen auf das Gesamtgewicht der Zusammensetzung a, Folgendes umfasst:
- 45 bis 70 Gew.-% einer Zusammensetzung a1 von Styrol-Blockcopolymeren, umfassend mindestens einen Elastomerblock, wobei die Zusammensetzung a1, bezogen auf ihr Gesamtgewicht, aus Folgendem besteht:
- 30 bis 90 Gew.-% mindestens eines Diblockcopolymers des Styrol-Isopren(SI)-Typs und aus
- 10 bis 70 Gew.-% mindestens eines geraden Styrol-Isopren-Styrol(SIS)-Triblockcopolymers;
wobei der Gesamtgehalt an Styrolmotiven der Zusammensetzung a1 von 10 bis 40 Gew.-%, bezogen auf das Gesamtgewicht von a1, variiert; und
- 30 bis 55 Gew.-% mindestens eines klebrigmachenden Harzes a2 mit einer Erweichungstemperatur zwischen 5 und 150°C, und die durch ein Verfahren erhältlich ist, das Folgendes umfasst:
- einen ersten Schritt der Polymerisation einer Zusammensetzung, ausgewählt aus:
- einer Zusammensetzung (i), die im Wesentlichen aus ungesättigten Kohlenwasserstoffen mit 9 Kohlenstoffatomen besteht, oder
- einer Zusammensetzung (ii), die im Wesentlichen aus Dicyclopentadien und dessen Derivaten mit 10 Kohlenstoffatomen besteht; und
- einen zweiten Schritt der Hydrierung des so erhaltenen Polymers.

2. Selbstklebende Schmelzklebstoffzusammensetzung nach Anspruch 1, **dadurch gekennzeichnet, dass** der Gehalt an SI-Diblöcken in der Zusammensetzung a1 von 50 bis 80% variiert.

3. Selbstklebende Schmelzklebstoffzusammensetzung nach einem der Ansprüche 1 oder 2, **dadurch gekennzeichnet, dass** die Erweichungstemperatur des klebrigmachenden Harzes a2 zwischen 80 und 150°C beträgt.

4. Selbstklebende Schmelzklebstoffzusammensetzung nach einem der Ansprüche 1 bis 3, **dadurch gekennzeichnet, dass** sie im Wesentlichen aus der Zusammensetzung a1 und einem klebrigmachenden Harz a2 besteht.

5. Selbstklebende Schmelzklebstoffzusammensetzung nach einem der Ansprüche 1 bis 4, **dadurch gekennzeichnet, dass** ihr Fließindex von 2 bis 70 g/10 Minuten reicht.

6. Selbstklebende Schmelzklebstoffzusammensetzung nach einem der Ansprüche 1 bis 5, **dadurch gekennzeichnet, dass** sie in Form von Granulat mit einer Größe zwischen 1 und 10 mm vorliegt.

7. Mehrschichtige Folie, umfassend 2 Dünnschichten B und C aus thermoplastischem Material, die miteinander durch eine Klebstoffschicht A verbunden sind, **dadurch gekennzeichnet, dass** die Schicht A eine Dicke zwischen 7 und 50 µm besitzt und aus der selbstklebenden Schmelzklebstoffzusammensetzung nach einem der Ansprüche 1 bis 6 besteht.

8. Mehrschichtige Folie nach Anspruch 7, **dadurch gekennzeichnet, dass** die Dicke der Klebstoffschicht A zwischen 7 und 35 µm beträgt.

9. Mehrschichtige Folie nach einem der Ansprüche 7 oder 8, **dadurch gekennzeichnet, dass** sie zusätzlich zu den Schichten A, B und C 2 Bindeschichten D und E umfasst, derart, dass die Klebstoffschicht A
- mit der Schicht B über die Schicht D verbunden ist und
- mit der Schicht C über die Schicht E verbunden ist.

10. Mehrschichtige Folie nach einem der Ansprüche 7 bis 9, **dadurch gekennzeichnet, dass** die Bindeschichten D und E aus Zusammensetzungen d und e bestehen, die gleich oder verschieden sind und die eine Schmelztemperatur von etwa 80 bis 120°C aufweisen und im Wesentlichen Polymere umfassen, die aus den folgenden ausgewählt sind:
- Homopolymeren oder Copolymeren von Ethylen,
- Homopolymeren oder Copolymeren von Propylen,
- Copolymeren von Ethylen mit einem polaren Comonomer und
- Homopolymeren oder Copolymeren von gepfropften Olefinen.

11. Dreischichtige Folie nach einem der Ansprüche 7 oder 8, **dadurch gekennzeichnet, dass** sie von der Klebstoffschicht A und den 2 Schichten B und C in der Aneinanderreihung B/A/C/ aufgebaut wird, wobei das Zeichen "/" bedeutet, dass die Flächen der entsprechenden Schichten in direktem Kontakt stehen.

12. 5-schichtige Folie nach einem der Ansprüche 9 oder 10, **dadurch gekennzeichnet, dass** sie von der Klebstoffschicht A, den 2 Zwischenschichten D und E und den 2 äußeren Schichten B und C in der Aneinanderreihung B/D/A/E/C aufgebaut wird, wobei das Zeichen "/" bedeutet, dass die Flächen der entsprechenden Schichten in direktem Kontakt stehen.

13. Verfahren zur Herstellung der mehrschichtigen Folie nach einem der Ansprüche 7 bis 12, **dadurch gekennzeichnet, dass** es einen Schritt der Coextrusion der selbstklebenden Schmelzklebstoffzusammensetzung und der Bestandteile der Schichten B und C und gegebenenfalls der Schichten D und E umfasst.

14. Verfahren zur Herstellung nach Anspruch 13, **dadurch gekennzeichnet, dass** die Zusammensetzungen und Bestandteile der Schichten A, B, C und gegebenenfalls D und E in die Coextrusionsvorrichtung in Form von Granulat mit einer Größe zwischen 1 und 10 mm eingebracht werden.

15. Verfahren zur Herstellung der mehrschichtigen Folie nach einem der Ansprüche 13 oder 14, **dadurch gekennzeichnet, dass** die verwendete Coextrusionsvorrichtung eine Coextrusionsvorrichtung für das Aufblasformen ist.

16. Verwendung der mehrschichtige Folie nach einem der Ansprüche 7 bis 12 zur Herstellung wiederverschließbarer Verpackungen.

## Claims

1. Hot-melt pressure-sensitive adhesive composition a having a melt flow index ranging from 0.01 to 200 g/10 minutes and comprising, on the basis of the total weight of the said composition a:
- from 45 to 70% by weight of a composition a1 of styrene block copolymers comprising at least one elastomer block, the said composition a1 being composed, on the basis of its total weight:
- of 30 to 90% by weight of at least one diblock copolymer of Styrene-Isoprene (SI) type, and
- of 10 to 70% by weight of at least one Styrene-Isoprene-Styrene (SIS) linear triblock copolymer;
the total content of styrene units of the said composition a1 varying from 10 to 40% by weight on the basis of the total weight of a1; and
- from 30 to 55% by weight of at least one tackifying resin a2 having a softening temperature of between 5 and 150°C and obtained by a process comprising:
- a first stage of polymerization of a composition chosen from:
- a composition (i) essentially composed of unsaturated hydrocarbons having 9 carbon atoms, or
- a composition (ii) essentially composed of dicyclopentadiene and of its derivatives having 10 carbon atoms; then
- a second stage of hydrogenation of the polymer thus obtained.

2. Hot-melt pressure-sensitive adhesive composition according to Claim 1, **characterized in that** the content of SI diblocks in the composition a1 varies from 50 to 80%.

3. Hot-melt pressure-sensitive adhesive composition according to either of Claims 1 and 2, **characterized in that** the softening temperature of the tackifying resin a2 is between 80 and 150°C.

4. Hot-melt pressure-sensitive adhesive composition according to one of Claims 1 to 3, **characterized in that** it is essentially composed of the composition a1 and of a tackifying resin a2.

5. Hot-melt pressure-sensitive adhesive composition according to one of Claims 1 to 4, **characterized in that** its melt flow index ranges from 2 to 70 g/10 minutes.

6. Hot-melt pressure-sensitive adhesive composition according to one of Claims 1 to 5, **characterized in that** it is provided in the form of granules with a size of between 1 and 10 mm.

7. Multilayer film comprising two thin layers B and C of thermoplastic material bonded together by an adhesive layer A, **characterized in that** the said layer A has a thickness of between 7 and 50 µm and is composed of the hot-melt pressure-sensitive adhesive composition a as defined in one of Claims 1 to 6.

8. Multilayer film according to Claim 7, **characterized in that** the thickness of the adhesive layer A is between 7 and 35 µm.

9. Multilayer film according to either of Claims 7 and 8, **characterized in that** it comprises, in addition to the layers A, B and C, two tie layers D and E such that the adhesive layer A is:
- connected to the layer B via the layer D, and
- connected to the layer C via the layer E.

10. Multilayer film according to one of Claims 7 to 9, **characterized in that** the tie layers D and E are composed of compositions d and e, which are identical or different, which have a melting point from approximately 80 to 120°C and essentially comprise polymers chosen from:
- ethylene homopolymers or copolymers,
- propylene homopolymers or copolymers,
- copolymers of ethylene with a polar comonomer, and
- grafted olefin homopolymers or copolymers.

11. Three-layer film according to either of Claims 7 and 8, **characterized in that** it consists of the adhesive layer A and the two layers B and C, according to the sequence B/A/C in which the "/" sign means that the faces of the layers concerned are in direct contact.

12. Film comprising five layers according to either of Claims 9 and 10, **characterized in that** it consists of the adhesive layer A, the two intermediate layers D and E and the two external layers B and C, according to the sequence B/D/A/E/C in which the "/" sign means that the faces of the layers concerned are in direct contact.

13. Process for the manufacture of the multilayer film as defined in one of Claims 7 to 12, **characterized in that** it comprises a stage of coextrusion of the hot-melt pressure-sensitive adhesive composition a and of the constituent materials of the layers B and C and, if appropriate, of the layers D and E.

14. Manufacturing process according to Claim 13, **characterized in that** the constituent compositions and materials of the layers A, B, C and, if appropriate, D and E are fed into the coextrusion device in the form of granules with a size of between 1 and 10 mm.

15. Process for the manufacture of the multilayer film according to either of Claims 13 and 14, **characterized in that** the coextrusion device employed is a bubble blowing coextrusion device.

16. Use of the multilayer film as defined in one of Claims 7 to 12 for the manufacture of resealable packagings.
